# EUROPÄISCHE PATENTSCHRIFT

(11) **EP 3 372 293 B1**
(45) Veröffentlichungstag und Bekanntmachung des Hinweises auf die Patenterteilung: **14.04.2021**
(21) Anmeldenummer: 17000360.2
(22) Anmeldetag: 07.03.2017
(51) Int. Cl.: B01D 33/044, B01D 33/056, B01D 33/067, B01D 33/80, F16J 15/12

(54) **BANDFILTER**
BAND FILTER
FILTRE À BANDE

(43) Veröffentlichungstag der Anmeldung: 12.09.2018
(73) Patentinhaber: Dipl.-Ing. Erich Fetzer GmbH & Co. KG, 72770 Reutlingen (DE)
(72) Erfinder: WAGNER, Jürgen, 72770 Reutlingen (DE)
(74) Vertreter: Späth, Dieter

(56) Entgegenhaltungen:
- EP-A1- 0 802 303
- EP-A1- 2 787 188
- EP-A2- 0 331 020

## Beschreibung

Die Erfindung betrifft ein Bandfilter gemäß dem Oberbegriff des Anspruchs 1, das zum Filtern von flüssigen Kühlschmierstoffen einer spanenden Metallbearbeitung vorgesehen ist. Andere Anwendungen sind nicht ausgeschlossen.

Ein solches Bandfilter ist bekannt aus der Patentanmeldung DE 10 2004 015 778 A1. Das bekannte Bandfilter weist ein kastenförmiges, oben offenes Gehäuse mit parallelen Seitenwänden auf, an deren Innenseiten zwei Kreisringe als Führungselemente für ein Filterband drehbar auf feststehend an den Innenseiten der Seitenwände angeordneten Ringen als Drehlagern gleitgelagert sind. Das - Filterband, beispielsweise ein Filtervlies, ist auf-etwa einem Halbkreisbogen unten um die Führungselemente herum geführt, so dass es eine rinnenförmige Filtermulde bildet, die stirnseitig durch die Seitenwände des Gehäuses des Bandfilters begrenzt ist. Das Filterband wird von einer Vorratsrolle abgewickelt, wie geschrieben unten um die Führungselemente herum geführt und anschließend nach außen umgelenkt, von wo es zusammen mit einem Filterkuchen beispielsweise in einen Sammelbehälter gelangt. Es wird das Filterband kontinuierlich oder bei Bedarf angetrieben und treibt die Führungselemente, die nicht selbst angetrieben sind, drehend an. Es kann auch ein endloses, d. h. ringförmiges Filterband außen um die Führunselemente herum, vorzugsweise unter der vom Filterband gebildeten Filtermulde hindurch rückgeführt werden. Zu filternde Flüssigkeit wird in die Filtermulde geleitet und fließt durch das Filterband in das wannenförmige Gehäuse. Dabei setzen sich Schmutzpartikel auf dem Filterband ab und bauen den gewünschten Filterkuchen auf, der zur Filterwirkung des Filterbandes beiträgt.

Die Patentanmeldung EP 0 331 020 A2 offenbart ebenfalls ein Bandfilter mit fest an Innenseiten paralleler Seitenwände eines Gehäuses angebrachten Kreisringen als Gleitlager, auf denen Kreisringe als Führungselemente für ein Filterband drehbar gelagert sind, um die ein Filterband herum geführt ist. Die die Gleitlager bildenden Kreisringe weisen umlaufende Nuten in ihren Außenumfangsflächen auf, in denen O-Ringe zu einer Abdichtung zwischen den Gleitlagern und den Führungselemente einliegen.

Die vorliegende Erfindung ist auf eine verbesserte Abdichtung zwischen den drehbaren Führungselementen, um die das Filterband geführt ist, und ihren Drehlagern gerichtet.

Das erfindungsgemäße Bandfilter mit den Merkmalen des Anspruchs 1 weist zwei drehbare Führungselemente auf, um die ein Filterband zur Bildung einer rinnenförmigen Filtermulde mit einem Umschlingungswinkel von beispielsweise etwa 180° und in einer Gebrauchslage des Bandfilters vorzugsweise unten herum geführt ist. Die Führungselemente sind insbesondere Kreisringe, die gleichachsig in zueinander parallelen und voneinander beanstandeten Ebenen angeordnet sind. Die beiden Führungselemente sind mit Drehlagern drehbar gelagert. Die Drehlager sind beispielsweise feststehend angeordnete Kreisscheiben oder Kreisringe. Insbesondere sind die Führungselemente gleitgelagert, sie können allerdings auch wälzgelagert sein. Es können die Drehlagerung als feststehende und die Führungselemente als drehbare Teile von Drehlagern aufgefasst werden.

Zu einer Abdichtung zwischen den Führungselementen und den Drehlagern weisen die Führungselementen und/oder die Drehlager eine Dichtungsnut in einer Lagerfläche auf, in der eine Dichtung einliegt. Lagerflächen sind einander zugewandte, normalerweise zylindrische, lochscheibenförmige oder kegelstumpfförmige Flächen der Führungselemente und der Drehlager. Bei einer Gleitlagerung liegen die Lagerflächen der Führungselemente an den Lagerflächen der Drehlager an und gleiten bei Drehung der Führungselemente auf einander. Die erfindungsgemäßen Dichtungen weisen einen Draht als Seele und einen Dichtschlauch auf, der die Seele umgibt. Der die Seele der Dichtung bildende Draht kann auch als Stütze und/oder als Spannelement für den Dichtschlauch aufgefasst werden.

Die Erfindung ermöglicht eine gute, verschleißarme und reibungsarme sowie materialabhängig bis beispielsweise etwa 200°C temperaturbeständige Abdichtung zwischen den Führungselementen und den Drehlagern.

Der Draht, sofern er ausreichend steif ist, gibt der erfindungsgemäßen Dichtung eine Form, was für eine Dichtung, die kein geschlossener Ring ist und deswegen nicht um die Drehlager herum gespannt werden kann, von Bedeutung sein kann. Eine Ausgestaltung der Erfindung sieht einen kreisbogenförmigen Draht und damit eine gleichfalls kreisbogenförmige Dichtung vor. Eine Weiterbildung sieht einen etwa halbkreisbogenförmigen Draht vor. Sofern der Draht nicht länger als ein Halbkreisbogen ist, lässt er sich problemlos radial von außen oder von innen in die Dichtungsnut einsetzen. Ist der Draht länger als ein Halbkreisbogen, lässt er sich von außen oder von innen in die Dichtungsnut einschnappen und hält die Dichtung während eines Zusammenbaus der Führungselemente und der Drehlager in der Dichtungsnut, solange die Dichtungsnut offen ist. Das vereinfacht den Zusammenbau.

Der Draht der erfindungsgemäßen Dichtung ist insbesondere ein Metalldraht, ein Stahldraht, vorzugsweise ein Edelstahldraht oder ein Draht aus nicht rostendem Stahl. Allerdings ist auch ein Draht aus einem anderen Werkstoffe möglich, beispielsweise ein Kunststoffdraht. Der Draht kann einen Kreisquerschnitt oder einen anderen Querschnitt aufweisen.

Der Dichtschlauch besteht beispielsweise aus Ethylen-Propyläen-Dien-Kautschuk (EPDM), wodurch die Dichtung bis etwa 200°C temperaturbeständig ist. Der Dichtschlauch kann einen Kreisringquerschnitt oder die Außenform eines Quadrings mit einem Loch für den Draht aufweisen. Auch ein Dichtschlauch mit einer oder mehreren Dichtlippen oder Dichtwulsten an einer Außenseite ist möglich. Die Aufzählung möglicher Querschnitte des Dichtungsschlauchs der erfindungsgemäßen Dichtung ist beispielhaft und nicht abschließend.

Eine Ausgestaltung der Erfindung sieht Führungselemente und/oder Drehlager aus Kunststoff vor. Das ermöglicht eine reibungsarme Gleitlagerung. Die Dichtungen schützen die einander zugewandten Lagerflächen der Führungselemente und der Drehlager auf der Filtermulde abgewandten Seiten der Dichtungen vor Feststoffen aus der zu filternden Flüssigkeit.

Die Erfindung wird nachfolgend anhand eines in der Zeichnung dargestellten Ausführungsbeispiels näher erläutert. Die beiden Figuren zeigen:
- Figur 1: einen Schnitt eines erfindungsgemäßen Bandfilters radial zu einer Drehachse; und
- Figur 2: einen vergrößerten Querschnitt einer Drehlagerung entlang Linie II-II in Figur 1.

Die Zeichnung ist eine vereinfachte und schmatisierte Darstellung zur Erläuterung und zum Verständnis der Erfindung.

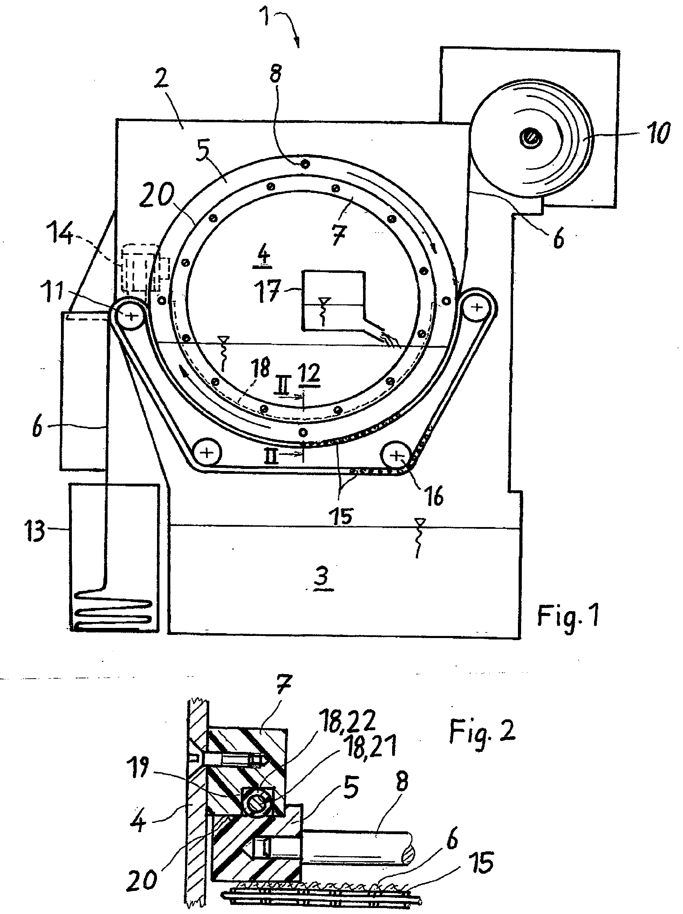

Das in Figur 1 dargestellte, erfindungsgemäße Bandfilter 1 ist zum Filtern von flüssigen Kühlschmierstoffen einer spanenden Metallbearbeitung vorgesehen, allerdings auch für andere Zwecke verwendbar. Es weist ein Gehäuse 2 auf, dessen unterer Bereich eine Auffangwanne 3 für gefilterte Flüssigkeit (Filtrat) bildet. An Innenseiten von Seitenwänden 4 des Gehäuses 2 sind Kreisringe als Führungselemente 5 drehbar gelagert, die eine Bandführung für ein Filterband 6 bilden. Zur Drehlagerung sind kreisringförmige Drehlager 7 an den Innenseiten der Seitenwände 4 des Gehäuses 2 feststehend angebracht, auf denen die Führungselemente 5 drehbar gleitgelagert sind. Die Seitenwände 4 sind parallel zueinander, so dass die Führungselemente 4 und die Drehlager 7 in zueinander parallelen und voneinander beabstandeten Ebenen angeordnet sind. Die Führungselemente 5 und die Drehlager 7 bestehen aus Kunststoff und sind an beiden Seitenwänden 4 gleichachsig angeordnet, wobei eine geometrische Achse der Führungselemente 5 und der Drehlager 7 zugleich auch eine Drehachse der Führungselemente 5 ist. Es können auch die Führungselemente 5 als drehbare Teile und die Drehlager 7 als feststehende Teile von Drehlagern aufgefasst werden. Zwischen den Führungselementen 5 erstrecken sich Stangen als Traversen 8 parallel zur Drehachse der Führungselemente 5 und halten die Führungselement 5 in Abstand voneinander und dadurch auf den feststehenden Drehlagern 7.

Das Filterband 6, das beispielsweise aus Vlies besteht, wird von einer Vorratsrolle 10 auf einer Seite der Führungselemente 5 abgewickelt und um eine Unterseite der drehbaren Führungselemente 5 herum bis zu einer Umlenkrolle 11 auf einer gegenüberliegenden Seite der Führungselemente 5 herum geführt. Das Filterband 6 ist so breit oder nahezu so breit wie ein Abstand der Seitenwände 4 des Gehäuses 2 des Bandfilters 1, so dass Längsränder des Filterbandes 6 außen an den drehbaren Führungselementen 5 anliegen. Das Filterband 6 umschlingt die Führungselemente 5 auf etwa 180° in Umfangsrichtung, wobei die Umschlingung grundsätzlich auch größer oder kleiner sein kann. Durch die Führung des Filterbandes 6 um die drehbaren, die Führungselemente 5 bildenden Kreisringe bildet das Filterband 6 eine rinnenförmige Filtermulde 12, die an Stirnenden von den Seitenwänden 4 des Gehäuses 2 des erfindungsgemäßen Bandfilters 1 begrenzt wird.

Über die Umlenkrolle 11 wird das Filterband 6 ausgeleitet und gelangt in einen Sammelbehälter 13. Die Umlenkrolle 11 ist mit einem Elektromotor 14 antreibbar, der ein angeflanschtes Untersetzungs- und Winkelgetriebe aufweist. Die Führungselemente 5 weisen keinen eigenen Antrieb auf, sondern werden von dem etwa 180° um sie geführten Filterband 6 drehend angetrieben.

Im Bereich der Filtermulde 12 ist ein Gliederband als Stützband 15 um das Filterband 6 und die drehbaren Führungselemente 5 herum geführt, das das Filterband 6 im Bereich der Filtermulde 12 von außen abstützt und in Anlage am Umfang der Führungselemente 5 hält. Das Stützband 15 ist ein Endlosband, es wird um die antreibbare Umlenkrolle 11 und um nicht angetriebene Umlenkrollen 16 über der Auffangwanne 3 und unter der Filtermulde 12 hindurch rückgeführt.

Zum Einleiten zu filternder Flüssigkeit weist das Bandfilter 1 einen Einlauf 17 auf, der durch eine der Seitenwände 4 durchgeführt ist. Aus dem Einlauf 17 fließt die zu filternde Flüssigkeit in die Filtermulde 12, tritt durch das Filterband 6 und das Stützband 15 durch und tropft in die darunter befindliche Auffangwanne 3. Beim Durchtritt durch das Filterband 6 lagern sich Schmutzpartikel aus der zu filternden Flüssigkeit auf dem Filterband 6 ab und bauen an dessen Ober- bzw. Innenseite einen gewünschten Filterkuchen auf, der eine Wirksamkeit des Filterbandes 6 erhöht. Zum Entfernen des Filterkuchens aus der Filtermulde 12 wird das Filterband 6 durch Einschalten des Elektromotors 14 zur Ausleitstelle gefördert und gelangt zusammen mit dem Filterkuchen in den Sammelbehälter 13. Beim Fördern zieht das Filterband 6 unbenutztes Filterband 6 von der. Vorratsrolle 10 nach.

Zum Abdichten zwischen den drehbaren Führungselementen 5 und den feststehenden Drehlagern 7 weist das erfindungsgemäße Bandfilter 1 Dichtungen 18 auf, die in Dichtungsnuten 19 in Lagerflächen 20 der Drehlager 7 angeordnet sind (Figur 2). Die Dichtungen 18 können ebenso gut in Dichtungsnuten in Lagerflächen der Führungselemente 5 angeordnet sein (nicht dargestellt). Lagerflächen 20 sind einander zugewandte Flächen der Führungselemente 5 und der Drehlager 7. Bei Gleitlagern wie im erfindungsgemäßen Bandfilter 1 liegen die Lagerflächen 20 aneinander an und gleiten aufeinander, wenn sich die Führungselemente 5 drehen. Im Ausführungsbeispiel sind die Lagerflächen 20 der Führungselemente 5 deren Innenumfangsflächen und die Lagerflächen der Drehlager 7 deren Außenumfangsflächen.

Die Dichtungen 18 weisen eine Seele 21 aus Draht auf, die von einem Dichtschlauch 22 umgeben ist. Im Ausführungsbeispiel besteht die Seele 21 aus einem Runddraht aus nicht rostendem Stahl und der Dichtschlauch 22 aus Ethylen-Propyläen-Dien-Kautschuk (EPDM) mit kreisförmigem Querschnitt. Die Seele 21 ist halbkreisbogenförmig und hält die Dichtung 18 halbkreisbogenförmig. Sofern die Seele 21 kreisbogenförmig und länger als ein Halbkreis ist, lässt sich die Dichtung 18 zu einer Montage bei abgenommenem Führungselemente 5 in die Dichtungsnut 19 der Drehlager 7 einschnappen und hält dort, was das Aufsetzen der Führungselemente 5 auf die Drehlager 7 vereinfacht.

Durch ihre Ausführung aus nicht rostendem Stahl und aus EPDM sind die Dichtungen 18 korrosions- und chemisch beständig und temperaturfest bis etwa 200°C und mehr.

## Patentansprüche

1. Bandfilter, mit einem Filterband (6), das zur Bildung einer rinnenförmigen Filtermulde (12) um zwei drehbare und mit Abstand voneinander angeordnete Führungselemente (5) geführt ist, die mit zwei Drehlagern (7) drehbar gelagert sind, wobei zwischen den Drehlagern (7) und den Führungselementen (5) Dichtungen (18) angeordnet sind, **dadurch gekennzeichnet, dass** die Dichtungen (18) einen Draht als Seele (21) aufweisen, der von einem Dichtschlauch (22) umgeben ist.

2. Bandfilter nach Anspruch 1, **dadurch gekennzeichnet, dass** die Drehlager (7) und/oder die Führungselemente (5) Dichtungsnuten (19) in einer Lagerfläche (20) aufweisen, in denen die Dichtungen (18) angeordnet sind.

3. Bandfilter nach Anspruch 1oder 2, **dadurch gekennzeichnet, dass** der die Seele (21) der Dichtungen (18) bildenden Draht kreisbogenförmig ist.

4. Bandfilter nach einem der Ansprüche 1 bis 3, **dadurch gekennzeichnet, dass** der der die Seele (21) der Dichtungen (18) bildenden Draht etwa halbkreisbogenförmig ist.

5. Bandfilter nach einem der vorhergehenden Ansprüche, **dadurch gekennzeichnet, dass** der die Seele (21) der Dichtungen (18) bildende Draht ein Edelstahldraht ist und/oder der Dichtschlauch (22) aus EPDM besteht.

6. Bandfilter nach einem der vorhergehenden Ansprüche, **dadurch gekennzeichnet, dass** die drehbaren Führungselemente (5) und/oder die Drehlager (7) aus Kunststoff bestehen.

7. Bandfilter nach einem der vorhergehenden Ansprüche, **dadurch gekennzeichnet, dass** die drehbaren Führungselemente (5) Ringe sind.

## Claims

1. Belt filter, comprising a filter belt (6) which, in order to form a channel-shaped filter trough (12), is guided about two rotatable guide elements (5) which are arranged so as to be mutually spaced and which are rotatably mounted by means of two rotary bearings (7), seals (18) being arranged between the rotary bearings (7) and the guide elements (5), **characterised in that** the seals (18) have a wire as a core (21) which is surrounded by a sealing tube (22).

2. Belt filter according to claim 1, **characterised in that** the rotary bearings (7) and/or the guide elements (5) have sealing grooves (19) in a bearing surface (20), in which grooves the seals (18) are arranged.

3. Belt filter according to either claim 1 or claim 2, **characterised in that** the wire forming the core (21) of the seals (18) is in the shape of a circular arc.

4. Belt filter according to any of claims 1 to 3, **characterised in that** the wire forming the core (21) of the seals (18) is approximately in the shape of a semicircular arc.

5. Belt filter according to any of the preceding claims, **characterised in that** the wire forming the core (21) of the seals (18) is a stainless steel wire and/or the sealing tube (22) consists of EPDM.

6. Belt filter according to any of the preceding claims, **characterised in that** the rotatable guide elements (5) and/or the rotary bearings (7) consist of plastics material.

7. Belt filter according to any of the preceding claims, **characterised in that** the rotatable guide elements (5) are rings.

## Revendications

1. Filtre à bande muni d'une bande filtrante (6) guidée, en vue de former une auge de filtration (12) configurée en rigole, autour de deux éléments rotatifs de guidage (5) qui sont agencés à distance l'un de l'autre et sont montés rotatifs au moyen de deux paliers de rotation (7), des garnitures d'étanchement (18) étant interposées entre lesdits paliers de rotation (7) et lesdits éléments de guidage (5), **caractérisé par le fait que** les garnitures d'étanchement (18) sont dotées d'un fil métallique qui constitue une âme (21) et est entouré d'un tuyau souple d'étanchement (22).

2. Filtre à bande selon la revendication 1, **caractérisé par le fait que** les paliers de rotation (7) et/ou les éléments de guidage (5) sont pourvus, dans une surface d'appui (20), de rainures d'étanchement (19) dans lesquelles les garnitures d'étanchement (18) sont disposées.

3. Filtre à bande selon la revendication 1 ou 2, **caractérisé par le fait que** le fil métallique, constituant l'âme (21) des garnitures d'étanchement (18), revêt la forme d'un arc de cercle.

4. Filtre à bande selon l'une des revendications 1 à 3, **caractérisé par le fait que** le fil métallique, constituant l'âme (21) des garnitures d'étanchement (18), revêt sensiblement la forme d'un demi-arc de cercle.

5. Filtre à bande selon l'une des revendications précédentes, **caractérisé par le fait que** le fil métallique constituant l'âme (21) des garnitures d'étanchement (18) est un fil en acier spécial, et/ou le tuyau souple d'étanchement (22) consiste en un EPDM.

6. Filtre à bande selon l'une des revendications précédentes, **caractérisé par le fait que** les éléments rotatifs de guidage (5), et/ou les paliers de rotation (7), sont constitués d'une matière plastique.

7. Filtre à bande selon l'une des revendications précédentes, **caractérisé par le fait que** les éléments rotatifs de guidage (5) sont des anneaux.
